# EUROPEAN PATENT SPECIFICATION

(11) **EP 2 466 873 B1**
(45) Date of publication and mention of the grant of the patent: **23.07.2014**
(21) Application number: 10195724.9
(22) Date of filing: 17.12.2010
(51) Int. Cl.: H04N 5/235, G03B 7/16, G03B 15/05

(54) **Reduced pre-flash for camera devices with LED flash**
Verringerter Vorblitz für Kameravorrichtungen mit LED-Blitz
Pré-flash réduit pour dispositifs à appareil photo de type flash à LED

(43) Date of publication of application: 20.06.2012
(73) Proprietor: BlackBerry Limited, Waterloo, ON N2K 0A7 (CA)
(72) Inventor: Gilbert-Schachter, Yochanan Cliel Manoach, Waterloo Ontario N2L 3W8 (CA); Wang, Qian, Waterloo Ontario N2J 4Z7 (CA)
(74) Representative: Fennell, Gareth Charles

(56) References cited:
- EP-A1- 1 765 006
- US-A1- 2002 061 190
- US-A1- 2007 189 752
- US-A1- 2007 248 342
- US-A1- 2008 193 119
- US-B1- 6 272 292

## Description

### FIELD OF TECHNOLOGY

The present disclosure relates generally to the pre-flash for a camera device. More specifically, the present disclosure relates to a camera device and a method for using a shortened pre-flash for a camera device having a flash, such as a light emitting diode (LED) flash.

### BACKGROUND

Cameras are becoming more prevalent and more advanced. Advances are being made with respect to flashes for camera devices. Camera devices can include standalone cameras, mobile devices having a camera module, or any other device that includes a camera module capable of taking pictures. Mobile devices can include, but are not limited to, cellular telephones, smart telephones, wireless personal digital assistants (PDAs), and laptop computers having a camera module capable of taking pictures. When taking a picture with a camera device having a flash, the flash can be irritating to the eyes of one or more people in the picture and can affect the eyes of one or more people near the camera as well. For example, when the flash is being used and a user presses the shutter release of the camera device, the flash emits a pre-flash and captures data. Using the pre-flash data, the camera device can determine a focus point, set a white balance value and set the exposure for a picture. The pre-flash can last for 1-5 seconds for an LED flash and can be irritating to the eyes of the people within the flash area. In addition, the pre-flash can cause one or more people having their picture taken to close their eyes which can cause an additional photo to be taken. The additional photo can require additional time and memory space.

### BRIEF DESCRIPTION OF THE DRAWINGS

Implementations of the present application will now be described, by way of example only, with reference to the attached Figures, wherein

Figure 1 is a block diagram of a mobile device in a communication network in accordance with an exemplary implementation;

Figure 2 is a flowchart of a method for taking a picture with a camera device using a shortened pre-flash in accordance with an exemplary implementation;

Figure 3 is back view of a mobile device having a camera module and a flash in accordance with an exemplary implementation;

Figure 4 is front view of a mobile device with the flash status being displayed in accordance with an exemplary implementation; and

Figure 5 is side view of a mobile device taking a picture in accordance with an exemplary implementation.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the implementations described herein. However, it will be understood by those of ordinary skill in the art that the implementations described herein can be practiced without these specific details. In other instances, methods, procedures and components have not been described in detail so as not to obscure the related relevant function being described. Also, the description is not to be considered as limiting the scope of the implementations described herein.

Several definitions that apply throughout this disclosure will now be presented. The word "coupled" is defined as connected, whether directly or indirectly through intervening components, and is not necessarily limited to physical connections. The term "communicatively coupled" is defined as connected, whether directly or indirectly through intervening components, is not necessarily limited to a physical connection, and allows for the transfer of data. The term "mobile device" is defined as any electronic device that is capable of at least accepting information entries from a user and includes the device's own power source. A "wireless communication" means communication that occurs without wires using electromagnetic radiation. The term "memory" refers to transitory memory and non-transitory memory. For example, non-transitory memory can be implemented as Random Access Memory (RAM), Read-Only Memory (ROM), flash, ferromagnetic, phase-change memory, and other non-transitory memory technologies.

The present disclosure describes camera devices, such as a mobile device having a camera module, and methods for using a shortened pre-flash when taking pictures with a flash, such as an LED flash. A shortened pre-flash is a pre-flash that has a shorter duration compared to a standard pre-flash. The pre-flash durations can be device specific. An example of a standard pre-flash can be between 2-5 seconds and a shortened pre-flash can be less than 400 milliseconds. In one or more implementations, the shortened pre-flash can be zero. The shortened pre-flash can be used to obtain only a white balance measurement and an auto-exposure measurement compared to a standard pre-flash which can be used to obtain a white balance measurement, an auto-exposure measurement and auto-focus. Based on a flash status, for example, on mode, off mode or auto mode, and a brightness value, a shortened pre-flash can be used in place of the longer standard pre-flash. For example, in the event that there is sufficient light to capture an image, the shortened pre-flash can be utilized. In another example, if there is not sufficient light to capture an image but there is sufficient light to execute auto-focus, the shortened pre-flash can be utilized. By avoiding the auto-focus during the pre-flash, the camera device is able to use the shortened pre-flash. By using a shortened pre-flash, there can be a reduction of the amount of eye irritation compared to standard pre-flash.

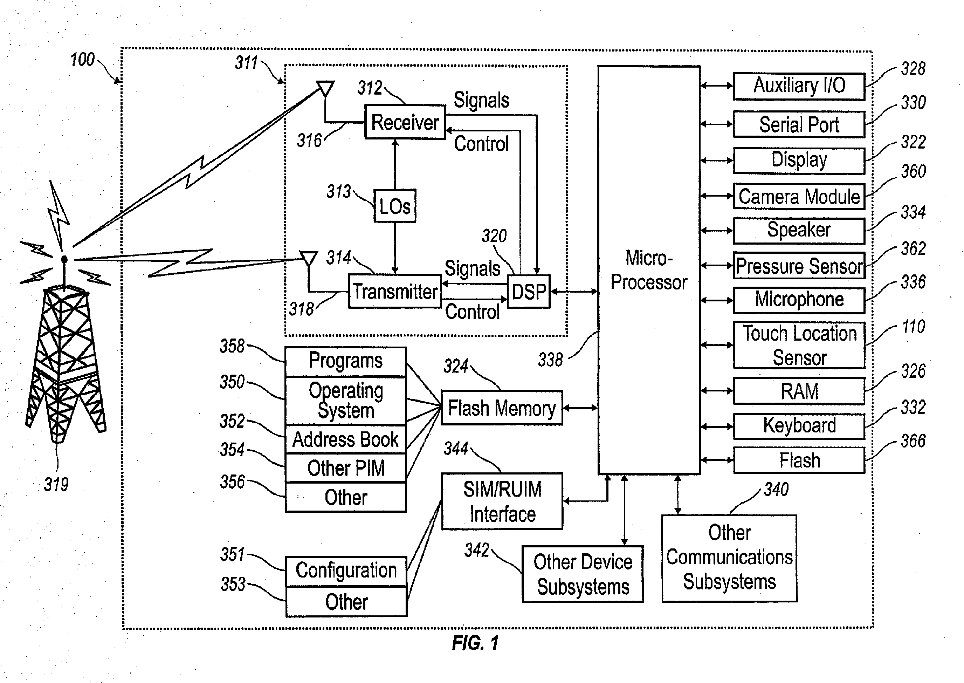

Referring to Figure 1, a block diagram of a mobile device in a communication network in accordance with an exemplary implementation is illustrated. As shown, the mobile device 100 can include a microprocessor or processor 338 that controls the operation of the mobile device 100, such as facilitating communications, providing a graphical user interface, executing programs, and so forth. A communication subsystem 311 performs communication transmission and reception with the wireless network 319. The microprocessor 338 further can be coupled with an auxiliary input/output (I/O) subsystem 328 that can be coupled to the mobile device 100. Additionally, in at least one implementation, the microprocessor 338 can be coupled to a serial port (for example, a Universal Serial Bus port) 330 that facilitates communication with other devices or systems via the serial port 330. A display 322 can be communicatively coupled to the microprocessor 338 to facilitate display of information to an operator of the mobile device 100. When the mobile device 100 is equipped with a keyboard 332, which may be physical or virtual (for example, displayed), the keyboard 332 can be communicatively coupled to the microprocessor 338. The mobile device 100 can include one or more speakers 334 and one or more microphones 336, which can be communicatively coupled to the microprocessor 338 as discussed in further detail below. The mobile device 100 can include a camera module 360 and a flash 366 as described below. Other similar components can be provided on or within the mobile device 100 and are optionally communicatively coupled to the microprocessor 338. Other communication subsystems 340 and other mobile device subsystems 342 are generally indicated as communicatively coupled with the microprocessor 338. An example of a communication subsystem 340 is a short-range communication system such as a BLUETOOTH^{®} communication module or a WI-FI^{®} communication module (a communication module in compliance with IEEE 802.11b) and associated circuits and components. Additionally, the microprocessor 338 can perform operating system functions and can execute programs or software applications or firmware applications on the mobile device 100. In some implementations, not all of the above components are included in the mobile device 100. The auxiliary I/O subsystem 328 can take the form of one or more different navigation tools (multi-directional or single-directional), external display devices such as keyboards, and other subsystems capable of providing input or receiving output from the mobile device 100.

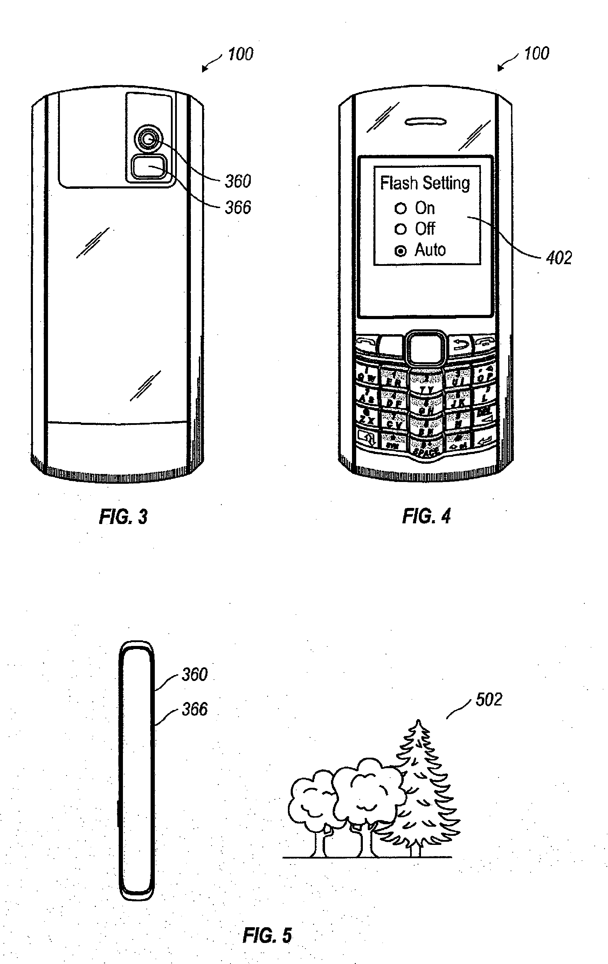

Referring to Figure 3, a back view of a mobile device having a camera module and a flash in accordance with an exemplary implementation is illustrated. As shown, the mobile device 100 can include a camera module 360 and a flash 366. The camera module 360 can be used to take pictures. The flash 366 can be used to generate shortened pre-flashes, pre-flashes and flashes. The flash 366 can be an LED, a tube filled with xenon gas, or any other flash that can generate pre-flashes and flashes. The flash 366 can be part of a camera device or mobile device 100. In one or more implementations, the flash 366 can be communicatively coupled to the camera device or mobile device 100.

The mobile device 100 can be equipped with components to enable operation of various programs, as shown in Figure 1. As shown, the memory or memory component 324 can provide storage for the operating system 350, device programs 358, data, and so forth. The operating system 350 can be generally configured to manage other programs 358 that are also stored in memory 324 and are executable on the processor 338. The operating system 350 can receive, process and respond to requests for services made by programs 358 through predefined program 358 interfaces. More specifically, the operating system 350 can typically determine the order in which multiple programs 358 are executed on the processor 338 and the execution time allotted for each program 358, manages the sharing of memory 324 among multiple programs 358, handles input and output to and from other device subsystems 342, and so forth. In addition, operators can interact directly with the operating system 350 through a user interface, typically including the keyboard 332 and display 322. The operating system 350, programs 358, data, and other information can be stored in memory 324, RAM 326, read-only memory (ROM), or another suitable storage element (not shown). An address book 352, personal information manager (PIM) 354, and other information 356 can also be stored.

The mobile device 100 can be enabled for two-way communication within voice, data, or voice and data communication systems. A Subscriber Identity Module (SIM) or Removable User Identity Module (RUIM) can be utilized to authorize communication with the communication network 319. A SIM/RUIM interface 344 within the mobile device 100 can interface a SIM/RUIM card to the microprocessor 338 and facilitates removal or insertion of a SIM/RUIM card (not shown). The SIM/RUIM card features memory and can hold key configurations 351, and other information 353 such as identification and subscriber related information. The mobile device 100 can be equipped with an antenna 318 for transmitting signals to the communication network 319 and another antenna 316 for receiving communication from the communication network 319. Alternatively, a single antenna (not shown) can be utilized to transmit and receive signals. A communication subsystem 311 can include a transmitter 314 and receiver 312, one or more antennae 316, 318, local oscillators (LOs) 313, and a processing module 320 such as a digital signal processor (DSP) 320.

The mobile device 100 can include a touch-sensitive display or touchscreen that includes one or more touch location sensors, an overlay, and a display 322, such as a liquid crystal display (LCD) or light emitting diode (LED) display. The touch location sensor(s) can be a pressure sensor 362, capacitive sensor, resistive sensor, infrared sensor, surface acoustic wave (SAW) sensor, or other type of touch-sensitive sensor(s) and can be integrated into the overlay. The overlay, or cover, can be comprised of laminated glass, plastic, or other suitable material(s) and is advantageously translucent or transparent. A touch, or touch contact, can be detected by the touchscreen and processed by the processor 338, for example, to determine a location of the touch or touch contact. Touch location data can include the center of the area of contact or the entire area of contact for further processing. A touch may be detected from a contact member, such as a body part of a user, for example a finger or thumb, or other objects, for example a stylus, pen, or other pointer, depending on the nature of the touch location sensor.

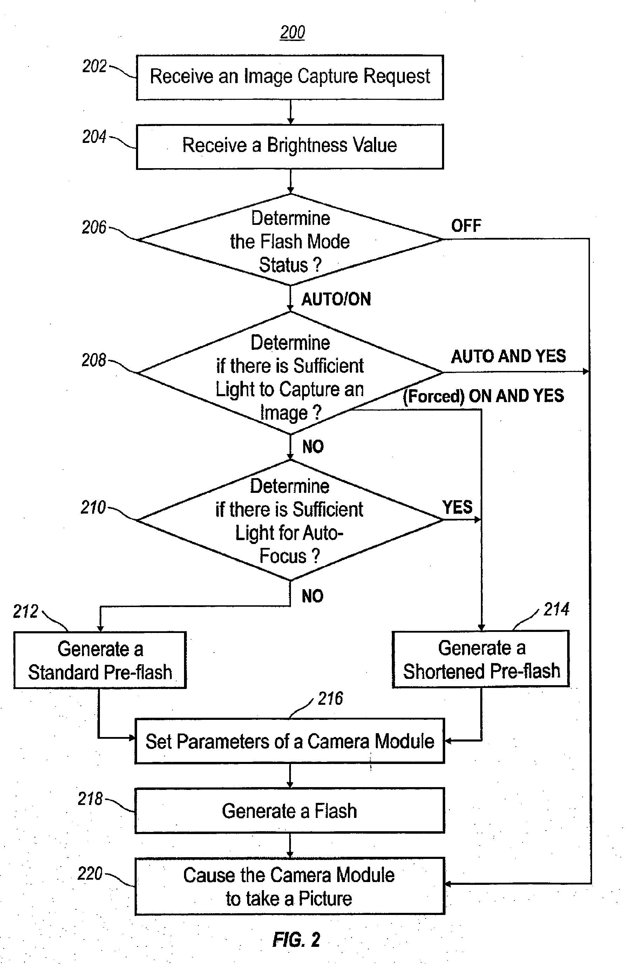

Referring to Figure 2, a flowchart of a method for taking a picture using a device having a shortened pre-flash in accordance with an exemplary implementation is illustrated. The exemplary method 200 is provided by way of example, as there are a variety of ways to carry out the method. The method 200 described below can be carried out using the mobile devices and communication network shown in Figure 1 by way of example, and various elements of these figures are referenced in explaining exemplary method 200. Each block shown in Figure 2 represents one or more processes, methods or subroutines, carried out in exemplary method 200. The exemplary method 200 may begin at block 202.

At block 202, an image capture request can be received. For example, the processor or microprocessor 338 of a camera device or a mobile device 100 having a camera module 360 can receive an image capture request. As shown in Figure 5, the camera device or mobile device 100 can be used to take a picture of a subject, such as trees 502. The image capture request can be received in response to a user pressing a picture button or shutter button (not shown) which results in an image capture request being sent to the processor 338. After receiving an image capture request, the method 200 can proceed to block 204.

At block 204, a brightness value can be received. For example, the processor or microprocessor 338 can receive a brightness value. The brightness value can come from an ambient light sensor (not shown), a view finder (not shown), camera module 260, or any other component that can provide a brightness value to the processor 338. In one or more implementations, the processor 338 can receive multiple brightness values and can choose one using known techniques. In one or more implementations, the brightness value can be received indirectly. For example, the brightness value can be estimated by taking the calculated optimal exposure time and gain. After receiving the brightness value, the method 200 can proceed to block 206.

At block 206, the flash mode status can be determined. For example, the processor or microprocessor 338 can determine the flash mode status which can include, but not limited to, an on mode, off mode and auto mode. As shown in Figure 4, the flash setting 402 can be displayed on the display 322 of the mobile device 100. The on mode (or forced on mode) can require the flash to generate a flash in response to receiving an image capture request. The off mode ensures that the flash will not generate a flash in response to receiving an image capture request. The auto mode can allow the processor 338 to determine whether a flash is needed based on one or more parameters, such as a brightness value. Thus, in the auto mode, depending on the brightness value, a shortened pre-flash can be used as described below in order to reduce the amount of eye irritation. In the event the flash mode status is determined to be in the off mode, the method can proceed to block 220. In the event the flash mode status is determined to be in the on mode or auto mode, the method can proceed to block 208.

At block 208, a determination is made whether there is sufficient light to capture an image. In one or more implementation, the processor or microprocessor 338 can compare the brightness value and a flash threshold. The flash threshold can be stored in memory 324. The flash threshold can be a set value based on the specifications of the camera module 360. For example, the flash threshold can be 90 lux. The flash threshold can be a set value for the auto-focus feature. For example, the flash threshold can determine whether a standard pre-flash or a shortened pre-flash can be used. The shortened pre-flash can reduce eye irritation. In the event the brightness value is not greater than the flash threshold, the method 200 can proceed to block 210. In the event the flash mode status is in on mode (or forced on mode) and the brightness value is greater than the flash threshold, then the method 200 can proceed to block 214. In the event the brightness value is greater than the flash threshold and the flash mode status is auto mode, then the method 200 can proceed to block 220.

At block 210, a determination is made whether there is sufficient light for auto-focus. For example, the processor or microprocessor 338 can compare the brightness value to an auto-focus threshold. The auto-focus threshold can be stored in memory 324. The auto-focus threshold can be a set value based on the specifications of the camera module 360. For example, the auto-focus threshold can be 50 lux. The auto-focus threshold can be a set value for determining whether there is sufficient light to perform auto-focusing. In the event the brightness value is greater than the auto-focus threshold, then the method 200 can proceed to block 214. In the event the brightness value is not greater than the auto-focus threshold, then the method 200 can proceed to block 212.

At block 212, a standard pre-flash can be generated. For example, the processor or microprocessor 338 can cause the flash to generate a standard pre-flash. The standard pre-flash is dependent on the specifications of the camera module 360 and associated flash 366. The flash 366 can be a light emitting diode (LED), a tube substantially filled with xenon gas, or any other flash device that can produce a standard pre-flash. In response to generating the standard pre-flash, the processor or microprocessor 338 obtains a white balance measurement, an auto-exposure measurement and auto-focus during the standard pre-flash. After generating the standard pre-flash and obtaining the camera parameters, the method 200 can proceed to block 216.

At block 214, a shortened pre-flash can be generated. For example, the processor or microprocessor 338 can cause the flash to generate a shortened pre-flash. The shortened pre-flash is dependent on the specifications of the camera module 360 and associated flash 366. In one or more implementations, the shortened pre-flash can be zero (which results in no-pre-flash). The flash 366 can be a light emitting diode (LED), a tube substantially filled with xenon gas, or any other flash device that can produce a shortened pre-flash. In response to generating the shortened pre-flash, the processor or microprocessor 338 obtains only a white balance measurement and an auto-exposure measurement. The auto-focus can be done before or after the shortened pre-flash. After generating the shortened pre-flash and obtaining the camera parameters, the method 200 can proceed to block 216.

At block 216, the parameters of a camera module can be set. For example, the processor or microprocessor 338 can set the parameters of the camera module 366. The parameters can include the white-balance measurement, auto-exposure measurement, and auto focus. For example, if a standard pre-flash was used, the parameters can be based on the white balance measurement, an auto-exposure measurement and auto-focus obtained during the standard pre-flash. In another example, if a shortened pre-flash was used, the parameters can be based on the white balance measurement and an auto-exposure measurement obtained during the shortened pre-flash and the auto-focus obtained before or after the shortened pre-flash. After setting the parameters of the camera module 366, the method can proceed to block 218.

At block 218, a flash is generated. For example, the processor or microprocessor 338 can cause the flash 366 to generate a flash. The flash 366 can be a light emitting diode (LED), a tube substantially filled with xenon gas, or any other flash device that can produce a flash. The duration of the flash can be based on the information gathered during the pre-flash, for example the standard pre-flash or the shortened pre-flash. After generating the flash, the method 200 can proceed to block 220.

At block 220, the camera module can take a picture. For example, the processor or microprocessor 338 can cause the camera module 360 to take a picture.

A camera module 360 capable to using a shortened pre-flash can provide several benefits to people within the flash area of the camera module 360. For example, since the shortened pre-flash is shorter in duration compared to a standard pre-flash, people will have a shorter exposure time of the flash during the shortened pre-flash thereby reducing eye irritation compared to a standard pre-flash.

Exemplary implementations have been described hereinabove regarding the implementation of pairing short range wireless devices with a mobile device. Various modifications to and departures from the disclosed implementations will occur to those having skill in the art.

## Claims

1. A processor implemented method (200) for taking a picture using a camera device (100), the method comprising:
receiving a brightness value (204) in response to receiving a picture request (202);
determining a flash status (206) based on a flash setting with the flash status being one of an off mode, on mode, and auto mode;
in the event the flash status is one of the on mode and auto mode, determining whether there is sufficient light to capture an image (208) based at least in part on a comparison of the brightness value and a flash threshold, the method further comprising:
if the brightness value is greater than the flash threshold and the flash status is in the on mode: generating a pre-flash (214) having a first duration and obtaining only a white balance measurement and an auto-exposure measurement during the pre-flash;
if the flash status is in one of the on mode and the auto mode and the brightness value is not greater than a flash threshold: generating a pre-flash having a second duration,
wherein the first duration is less than the second duration.

2. The processor implemented method (200) of claim 1 wherein in response to generating the pre-flash having the first duration,
setting parameters of a camera module (216) based on the white balance measurement and the auto-exposure measurement;
causing the flash to generate a flash (218); and
causing the camera module to take a picture (220).

3. The processor implemented method (200) of claim 1 wherein,
in the event the brightness value is greater than the flash threshold and the flash status is in the auto mode,
causing a camera module to take a picture (220) without a flash.

4. The processor implemented method (200) of claim 1 wherein,
the generation of the pre-flash having the second duration is further based upon a determination of the brightness value is not greater than an auto-focus threshold.

5. The processor implemented method (200) of claim 1 wherein,
in the event the flash status is one of the on mode and auto mode and the brightness value is not greater than the flash threshold,
determining whether there is sufficient light to perform an auto-focus (210) based at least in part on a comparison of the brightness value and an auto-focus threshold; and
in the event the brightness value is not greater than the auto-focus threshold,
causing the flash to generate a standard pre-flash (212) and obtain a white balance measurement, an auto-exposure measurement, and auto-focus during the generated standard pre-flash;
setting parameters of a camera module (216) based on the white balance measurement, the auto-exposure measurement, and the auto-focus;
cause the flash to generate a flash (218); and
cause the camera module to take a picture (220).

6. The processor implemented method (200) of claim 1 wherein, in the event the flash status is in the off mode, causing a camera module to take a picture (220) without a flash.

7. A camera device (100) comprising a processor (338), the processor (33) adapted to execute the steps of the processor implemented method (200) as recited in any one of the preceding claims.

8. The camera device (100) of claim 7 wherein the flash (366) is one of a light emitting diode (LED) and a tube filled with xenon gas.

9. The camera device (100) of claim 7 or 8 wherein the camera device (100) is a standalone camera.

10. The camera device (100) of claim 7 wherein the camera device (100) is a mobile device (100) having a camera module (360).

11. A computer readable medium (324) storing executable instructions according to the processor implemented method (200) as recited in any one of claims 1-6.

## Patentansprüche

1. Prozessor-implementiertes Verfahren (200) zum Aufnehmen eines Bilds unter Verwendung einer Kameravorrichtung (100), wobei das Verfahren aufweist:
Empfangen eines Helligkeitswerts (204) in Reaktion auf ein Empfangen einer Bildanforderung (202);
Bestimmen eines Blitz-Status (206) basierend auf einer Blitzeinstellung, wobei der Blitz-Status einer aus einem Aus-Modus, einem An-Modus und einem Auto-Modus ist;
in dem Fall, dass der Blitz-Status einer des An-Modus und des Auto-Modus ist, Bestimmen, ob ausreichend Licht vorhanden ist, um ein Bild aufzunehmen (208), basierend zumindest teilweise auf einem Vergleich des Helligkeitswerts und einer Blitz-Schwelle, wobei das Verfahren weiter aufweist:
wenn der Helligkeitswert größer ist als die Blitz-Schwelle und der Blitz-Status in dem An-Modus ist: Erzeugen eines Vorblitzes (214) mit einer ersten Dauer und Erlangen nur einer Weißabgleichmessung und einer automatischen Belichtungsmessung während des Vorblitzes;
wenn der Blitz-Status in einem des An-Modus und des Auto-Modus ist und der Helligkeitswert nicht größer ist als eine Blitz-Schwelle: Erzeugen eines Vorblitzes mit einer zweiten Dauer,
wobei die erste Dauer kürzer ist als die zweite Dauer.

2. Das Prozessor-implementierte Verfahren (200) gemäß Anspruch 1, wobei in Reaktion auf das Erzeugen des Vorblitzes mit der ersten Dauer Setzen von Parametern eines Kameramoduls (216) basierend auf der Weißabgleichmessung und der automatischen Belichtungsmessung; Veranlassen des Blitzes, einen Blitz zu erzeugen (218); und Veranlassen des Kameramoduls, ein Bild aufzunehmen (220).

3. Das Prozessor-implementierte Verfahren (200) gemäß Anspruch 1, wobei, in dem Fall, dass der Helligkeitswert größer ist als die Blitzschwelle und der Blitz-Status in dem Auto-Modus ist, Veranlassen eines Kameramoduls, ein Bild ohne Blitz aufzunehmen (220).

4. Das Prozessor-implementierte Verfahren (200) gemäß Anspruch 1, wobei das Erzeugen des Vorblitzes mit der zweiten Dauer weiter auf einer Bestimmung basiert, dass der Helligkeitswert nicht größer ist als eine Autofokus-Schwelle.

5. Das Prozessor-implementierte Verfahren (200) gemäß Anspruch 1, wobei in dem Fall, dass der Blitz-Status einer des An-Modus und des Auto-Modus ist und der Helligkeitswert nicht größer ist als die Blitzschwelle, Bestimmen, ob ausreichend Licht vorhanden ist, um einen Autofokus durchzuführen (210), basierend zumindest zum Teil auf einem Vergleich des Helligkeitswerts und einer Autofokus-Schwelle; und
in dem Fall, dass der Helligkeitswert nicht größer ist als die Autofokus-Schwelle,
Veranlassen des Blitzes, einen Standard-Vorblitz zu erzeugen (212) und eine Weißabgleichmessung, eine automatische Belichtungsmessung und einen Autofokus während des erzeugten Standard-Vorblitzes zu erlangen; Setzen von Parametern eines Kameramoduls (216) basierend auf der Weißabgleichmessung, der automatischen Belichtungsmessung und dem Autofokus;
Veranlassen des Blitzes, einen Blitz zu erzeugen (218); und
Veranlassen des Kameramoduls, ein Bild aufzunehmen (220).

6. Das Prozessor-implementierte Verfahren (200) gemäß Anspruch 1, wobei, in dem Fall, dass der Blitz-Status in dem Aus-Modus ist, Veranlassen eines Kameramoduls, ein Bild ohne einen Blitz aufzunehmen (220).

7. Eine Kameravorrichtung (100), die einen Prozessor (338) aufweist, wobei der Prozessor (33) ausgebildet ist zum Ausführen der Schritte des Prozessor-implementierten Verfahrens (200) gemäß einem der vorhergehenden Ansprüche.

8. Die Kameravorrichtung (100) gemäß Anspruch 7, wobei der Blitz (366) einer aus einer lichtemittierenden Diode (LED - light emitting diode) und einer Röhre ist, die mit Xenongas gefüllt ist.

9. Die Kameravorrichtung (100) gemäß Anspruch 7 oder 8, wobei die Kameravorrichtung (100) eine eigenständige Kamera ist.

10. Die Kameravorrichtung (100) gemäß Anspruch 7, wobei die Kameravorrichtung (100) eine mobile Vorrichtung (100) mit einem Kameramodul (360) ist.

11. Computerlesbares Medium (324) zum Speichern von ausführbaren Anweisungen gemäß dem Prozessor-implementierten Verfahren (200) gemäß einem der Ansprüche 1-6.

## Revendications

1. Procédé mis en oeuvre sur processeur (200) destiné à acquérir une image au moyen d'un dispositif d'appareil photo (100), le procédé consistant à :
recevoir une valeur de luminosité (204) en réponse à la réception d'une demande d'image (202) ;
déterminer l'état d'un flash (206) sur la base d'un réglage de flash, l'état du flash étant l'un d'un mode inactif, d'un mode actif et d'un mode automatique ;
dans le cas où l'état du flash est l'un du mode actif et du mode automatique, déterminer si la quantité de lumière est suffisante pour acquérir une image (208) sur la base au moins en partie d'une comparaison de la valeur de luminosité et d'un seuil de flash, le procédé consistant en outre à :
si la valeur de luminosité est supérieure au seuil de flash et si l'état du flash est le mode actif : générer un pré-flash (214) ayant une première durée et obtenir seulement une mesure d'équilibre des blancs et une mesure d'auto-exposition pendant le pré-flash ;
si l'état du flash est l'un du mode actif et du mode automatique, et si la valeur de la luminosité n'est pas supérieure à un seuil de flash : générer un pré-flash ayant une seconde durée,
dans lequel la première durée est inférieure à la seconde durée.

2. Procédé mis en oeuvre sur processeur (200) selon la revendication 1, consistant à, en réponse au fait de générer le pré-flash ayant la première durée,
régler des paramètres d'un module d'appareil photo (216) sur la base de la mesure d'équilibre des blancs et de la mesure d'auto-exposition ;
faire en sorte que le flash génère un flash (218) ; et
faire en sorte que le module d'appareil photo acquière une image (220).

3. Procédé mis en oeuvre sur processeur (200) selon la revendication 1, consistant à,
dans le cas où la valeur de la luminosité est supérieure au seuil de flash et où l'état du flash est le mode automatique, faire en sorte qu'un module d'appareil photo acquière une image (220) sans flash.

4. Procédé mis en oeuvre sur processeur (200) selon la revendication 1, dans lequel
la génération du pré-flash ayant la seconde durée est en outre basée sur une détermination du fait que la valeur de la luminosité n'est pas supérieure à un seuil de mise au point automatique.

5. Procédé mis en oeuvre sur processeur (200) selon la revendication 1, consistant à,
dans le cas où l'état du flash est l'un du mode actif et du mode automatique et où la valeur de la luminosité n'est pas supérieure au seuil de flash,
déterminer si la quantité de lumière est suffisante pour effectuer une mise au point automatique (210) sur la base au moins en partie d'une comparaison de la valeur de la luminosité et d'un seuil de mise au point automatique ; et
dans le cas où la valeur de la luminosité n'est pas supérieure au seuil de mise au point automatique,
faire en sorte que le flash génère un pré-flash normal (210) et obtenir une mesure d'équilibre des blancs, une mesure d'auto-exposition et une mise au point automatique pendant le pré-flash normal généré ;
régler des paramètres d'un module d'appareil photo (216) sur la base de la mesure d'équilibre des blancs, de la mesure d'auto-exposition et de la mise au point automatique ;
faire en sorte que le flash génère un flash (218) ; et
faire en sorte que le module d'appareil photo acquière une image (220).

6. Procédé mis en oeuvre sur processeur (200) selon la revendication 1, consistant à, dans le cas où l'état du flash est le mode inactif, faire en sorte qu'un module d'appareil photo acquière une image (220) sans flash.

7. Dispositif d'appareil photo (100) comprenant un processeur (338), le processeur (338) étant apte à exécuter les étapes du procédé mis en oeuvre sur processeur (200) selon l'une quelconque des revendications précédentes.

8. Dispositif d'appareil photo (100) selon la revendication 7, dans lequel le flash (366) est l'un d'une diode électroluminescente (LED) et d'un tube rempli de gaz xénon.

9. Dispositif d'appareil photo (100) selon la revendication 7 ou 8, dans lequel le dispositif d'appareil photo (100) est un appareil photo autonome.

10. Dispositif d'appareil photo (100) selon la revendication 7 ou 8, dans lequel le dispositif d'appareil photo (100) est un dispositif mobile (100) comportant un module d'appareil photo (360).

11. Support lisible par ordinateur (324) stockant des instructions exécutables conformément au procédé mis en oeuvre sur processeur (200) selon l'une quelconque des revendications 1-6.
